# FASCICULE DE BREVET EUROPEEN

(11) **EP 3 747 322 B1**
(45) Date de publication et mention de la délivrance du brevet: **16.02.2022**
(21) Numéro de dépôt: 20176371.1
(22) Date de dépôt: 25.05.2020
(51) Int. Cl.: A47J 31/44

(54) **MACHINE DE PRÉPARATION DE BOISSONS MUNIE D'UNE TÊTE DE DISTRIBUTION AJUSTABLE EN HAUTEUR**
GETRÄNKEZUBEREITUNGSMASCHINE, DIE MIT EINEM HÖHENVERSTELLBAREN AUSGABEKOPF AUSGESTATTET IST
BEVERAGE PREPARATION MACHINE PROVIDED WITH A HEIGHT-ADJUSTABLE DISPENSING HEAD

(30) Priorité: 28.05.2019 FR 1905683
(43) Date de publication de la demande: 09.12.2020
(73) Titulaire: SEB S.A., 69130 Ecully (FR)
(72) Inventeur: LAMBALLE, Alexandre, 53100 MAYENNE (FR)
(74) Mandataire: SEB Développement

(56) Documents cités:
- EP-A1- 2 245 970
- EP-A1- 3 395 212
- DE-U1- 8 615 604
- DE-U1- 20 017 859
- DE-U1-202015 100 586

## Description

La présente invention se rapporte au domaine technique général des machines de préparation de boissons, notamment des machines à café automatiques pour réaliser des préparations à base de café et/ou de lait.

Il est connu du document EP2245970 une machine de préparation de boissons comportant un bâti et une tête de distribution disposée devant le bâti et qui comprend au moins une conduite de distribution de boissons se terminant par une buse de distribution de boissons. La tête de distribution est mobile entre une position haute d'attente et une position basse de travail dans laquelle la buse de distribution de café est agencée à proximité d'une ouverture supérieure d'un récipient. Le bâti comporte une ouverture s'étendant verticalement à travers laquelle s'étend l'au moins une conduite de distribution de boissons. La machine de préparation de boissons comporte un organe de recouvrement de l'ouverture, agencé à l'intérieur du bâti et relié à la tête de distribution. L'organe de recouvrement est formé par un ruban flexible dont une extrémité supérieure est défléchie vers l'intérieur du bâti.

Ainsi, lorsque la tête de distribution est dans la position haute d'attente, l'extrémité supérieure du ruban flexible s'étend de manière importante vers l'intérieur de la machine de préparation de boissons. En conséquence, il est difficile d'agencer les autres composants de la machine de préparation de boissons dans l'espace interne résiduel du bâti.

De plus, un ruban flexible n'est pas facile à guider lors de ses déplacements générés par les déplacements de la tête de distribution.

Il est aussi connu du document DE202015100586U1 une machine de préparation de boissons comportant également un organe de recouvrement de l'ouverture.

Le but de la présente invention est de remédier aux inconvénients précités et de proposer une machine de préparation de boissons qui présente une conception simple et qui soit économique à mettre en œuvre.

Un autre but de la présente invention est de proposer une machine de préparation de boissons qui présente une mise en oeuvre simple et ergonomique. Ces buts sont atteints avec une machine de préparation de boissons comportant un bâti et une tête de distribution disposée devant le bâti et qui comprend au moins une conduite de distribution de boissons se terminant par une buse de distribution de boissons, ladite tête de distribution étant mobile entre une position haute d'attente et une position basse de travail dans laquelle la buse de distribution de boissons est agencée à proximité d'une ouverture supérieure d'un récipient, ledit bâti comportant une ouverture s'étendant verticalement à travers laquelle s'étend l'au moins une conduite de distribution de boissons, ladite machine de préparation de boissons comportant un organe de recouvrement de ladite ouverture, agencé à l'intérieur du bâti et relié à la tête de distribution caractérisée en ce que l'organe de recouvrement comporte un panneau solidaire de la tête de distribution et au moins une première plaque mobile verticalement par rapport au bâti et par rapport au panneau, ladite au moins première plaque et le panneau étant mobiles lors du déplacement de la tête de distribution entre
- une position de rangement dans laquelle l'au moins une première plaque et une partie d'extrémité du panneau sont agencées de manière superposées au-delà de l'ouverture, à l'intérieur du bâti,
- une position intermédiaire rabattue dans laquelle l'au moins une première plaque et la partie d'extrémité sont superposées et l'au moins une première plaque participe au recouvrement de l'ouverture
- et une position déployée dans laquelle l'au moins une première plaque s'étend au-delà du panneau pour participer au recouvrement de l'ouverture.

Ainsi, l'au moins une première plaque et la partie d'extrémité du panneau coulissent verticalement l'une par rapport à l'autre pour former des volets gigognes.

L'organe de recouvrement formé par le panneau et l'au moins une première plaque sont agencés directement derrière l'ouverture, sans empiéter dans l'espace interne du bâti. Un tel organe de recouvrement permet d'éviter que l'utilisateur insère un doigt à l'intérieur de la machine de préparation de boissons.

En considérant que l'au moins une première plaque présente une hauteur H, dans la position déployée, l'au moins une première plaque et la partie d'extrémité du panneau masquent l'ouverture sur une hauteur 2H et dans la position de rangement, l'au moins une première plaque et la partie d'extrémité du panneau occupent une hauteur H dans le bâti au-delà de l'ouverture. Ainsi, l'organe de recouvrement occupe un encombrement limité dans le bâti.

De manière avantageuse, l'organe de recouvrement comporte un élément d'entrainement qui coopère avec un élément d'appui de l'au moins une première plaque pour déplacer l'au moins une première plaque vers le haut.

Ainsi, le déplacement vers le haut de la tête de distribution entraine automatiquement le panneau et l'au moins une première plaque.

De préférence, le panneau comporte deux pattes latérales qui forment l'élément d'entrainement de l'au moins une première plaque.

De manière avantageuse, l'au moins une première plaque est ramenée vers le bas par gravité.

Une telle disposition permet d'obtenir un rappel automatique de l'au moins une première plaque vers le bas. Une telle conception est simple et économique à mettre en œuvre.

En cas de frottements empêchant le rappel automatique de l'au moins une première plaque vers le bas par gravité, l'organe de recouvrement comporte un système mécanique d'entrainement de l'au moins une première plaque vers le bas lorsque la tête de distribution est déplacée vers le bas.

De préférence, le bâti comporte une butée d'arrêt de l'au moins une première plaque dans son déplacement vers le bas, l'au moins une première plaque comportant une face inférieure destinée à coopérer avec la butée d'arrêt.

De manière avantageuse, le bâti comporte deux tiges de guidages agencées verticalement de part et d'autre de l'ouverture, la tête de distribution munie du panneau et l'au moins une première plaque étant mobiles verticalement sur les deux tiges de guidage.

Une telle disposition permet d'obtenir un guidage en translation fiable de la tête de distribution munie du panneau et de l'au moins une première plaque.

De préférence, l'au moins une première plaque comporte deux douilles de guidage qui coopèrent respectivement avec les deux tiges de guidages et chaque douille de guidage comporte une face inférieure qui forme une face d'appui de l'au moins une première plaque, la face inférieure coopérant avec une butée d'arrêt agencée sur le bâti.

De manière avantageuse, l'au moins une première plaque est destinée à masquer l'ouverture lorsque la tête de distribution est dans sa position basse, l'au moins une première plaque s'étendant au-dessus du panneau dans la position déployée.

Une telle disposition permet de limiter l'encombrement de l'organe de recouvrement au-dessus de l'ouverture. Ainsi, l'agencement des différents organes de la machines, notamment l'interface de commande est facilitée.

De préférence, l'organe de recouvrement comporte au moins des première et deuxième plaques mobiles verticalement l'une par rapport à l'autre, par rapport au bâti et par rapport au panneau, lesdites au moins première et deuxième plaques et le panneau étant mobiles lors du déplacement de la tête de distribution entre
- une position de rangement dans laquelle les au moins première et deuxième plaques et la partie d'extrémité du panneau sont agencées de manière superposée au-delà de l'ouverture, à l'intérieur du bâti,
- une première position intermédiaire rabattue dans laquelle les au moins première et deuxième plaques et la partie d'extrémité du panneau sont superposées et l'au moins une première plaque participe au recouvrement de l'ouverture,
- une deuxième position intermédiaire rabattue dans laquelle l'au moins une deuxième plaque et la partie d'extrémité du panneau sont superposées et les aux moins première et deuxième plaques participent au recouvrement de l'ouverture,
- et une position déployée dans laquelle les aux moins première et deuxième plaques s'étendent au-delà du panneau pour participer au recouvrement de l'ouverture.

En considérant que les au moins première et deuxième plaques présentent chacune une hauteur H, dans la position déployée, les au moins première et deuxième plaques et la partie d'extrémité du panneau masquent l'ouverture sur une hauteur 3H et dans la position de rangement, les au moins première et deuxième plaques et la partie d'extrémité du panneau occupent une hauteur H dans le bâti au-delà de l'ouverture. Ainsi, l'organe de recouvrement occupe un encombrement plus limité dans le bâti.

Avantageusement, l'organe de recouvrement comporte au moins des première, deuxième et troisième plaques mobiles verticalement chacune par rapport aux autres, par rapport au bâti et par rapport au panneau, lesdites au moins première, deuxième et troisième plaques et le panneau étant mobiles lors du déplacement de la tête de distribution entre
- une position de rangement dans laquelle les au moins première, deuxième et troisième plaques et une partie d'extrémité du panneau sont agencées de manière superposée au-delà de l'ouverture, à l'intérieur du bâti,
- une première position intermédiaire rabattue dans laquelle les au moins première, deuxième et troisième plaques et la partie d'extrémité du panneau sont superposées et l'au moins une première plaque participe au recouvrement de l'ouverture,
- une deuxième position intermédiaire rabattue dans laquelle les aux moins deuxième et troisième plaques et la partie d'extrémité du panneau sont superposées et les aux moins première et deuxième plaques participent au recouvrement de l'ouverture,
- une troisième position intermédiaire rabattue dans laquelle l'au moins troisième plaque et la partie d'extrémité du panneau sont superposées et les aux moins première, deuxième et troisième plaques participent au recouvrement de l'ouverture
- et une position déployée dans laquelle les aux moins première, deuxième et troisième plaques s'étendent au-delà du panneau pour participer au recouvrement de l'ouverture.

En considérant que les au moins première, deuxième et troisième plaques présentent chacune une hauteur H, dans la position déployée, les au moins première deuxième et troisième plaques et la partie d'extrémité du panneau masquent l'ouverture sur une hauteur 4H et dans la position de rangement, les au moins première, deuxième et troisième plaques et la partie d'extrémité du panneau occupent une hauteur H dans le bâti au-delà de l'ouverture. Ainsi, l'organe de recouvrement occupe un encombrement encore plus limité dans le bâti.

De préférence, la machine de préparation de boissons est une machine à café automatique.

L'invention sera mieux comprise à l'étude du mode de réalisation pris à titre nullement limitatif et illustré dans les figures annexées dans lesquelles :
[Fig. 1] La figure 1 illustre une vue en perspective d'une machine de préparation de boissons selon un mode particulier de réalisation de l'invention.
[Fig. 2] La figure 2 illustre une vue en perspective de la tête de distribution de la machine de préparation de boissons illustrée sur la figure 1, la tête de distribution étant en position basse.
[Fig. 3] La figure 3 illustre une vue en perspective de la tête de distribution selon une direction III illustrée sur la figure 2.
[Fig. 4] La figure 4 illustre une vue en coupe selon la ligne IV-IV de la tête de distribution illustrée sur la figure 2.
[Fig. 5] La figure 5 illustre une vue en perspective de l'organe de recouvrement de la tête de distribution selon une direction V illustrée sur la figure 4.
[Fig. 6] La figure 6 illustre une vue en perspective de l'organe de recouvrement de la tête de distribution selon une direction VI illustrée sur la figure 4.
[Fig. 7] La figure 7 illustre une vue en perspective de la tête de distribution de la machine de préparation de boissons illustrée sur la figure 1, la tête de distribution étant en position haute.
[Fig. 8] La figure 8 illustre une vue en perspective de la tête de distribution selon une direction VIII illustrée sur la figure 7.
[Fig. 9] La figure 9 illustre une vue en coupe selon la ligne IX-IX de la tête de distribution illustrée sur la figure 7.

On notera que, dans ce document, les termes "horizontal", "vertical", "inférieur", "supérieur", "longitudinal", "transversal", "haut", "bas", employés pour décrire la machine de distribution de boissons font référence à cette machine reposant sur un plan de travail, en situation d'usage.

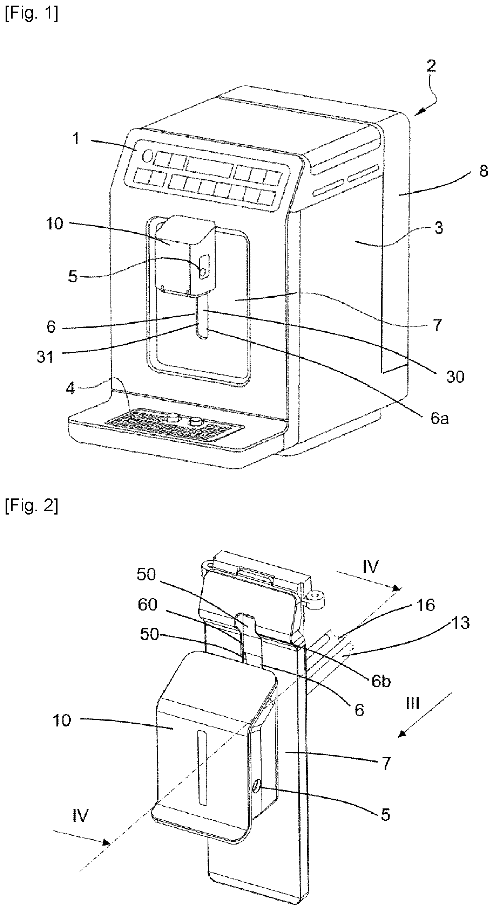

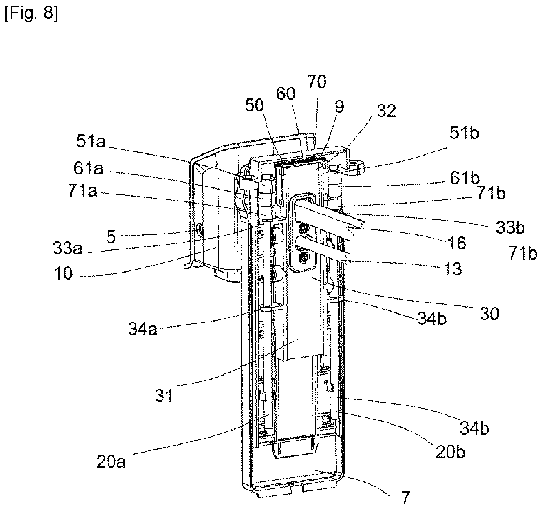

Dans l'exemple de réalisation représenté aux figures 1 à 9, une machine de préparation de boissons 2 comporte un bâti 3, un support de récipient 4 sur lequel un récipient peut être disposé, et une tête de distribution 10 de boissons réglable en hauteur (Fig.1). Le support de récipient 4 peut par exemple comporter une grille de support et un bac récolte-gouttes. La machine de préparation de boissons 2 comporte un circuit de contrôle 1 agencé au-dessus de la tête de distribution 10. Le bâti 3 comporte une face avant 7 et la tête de distribution est montée coulissante à l'extérieur du bâti 3, le long de la face avant 7.

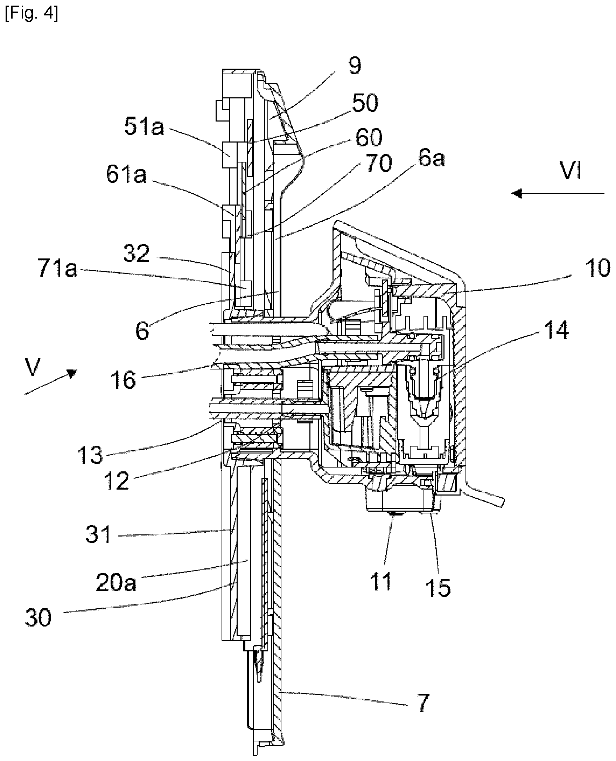

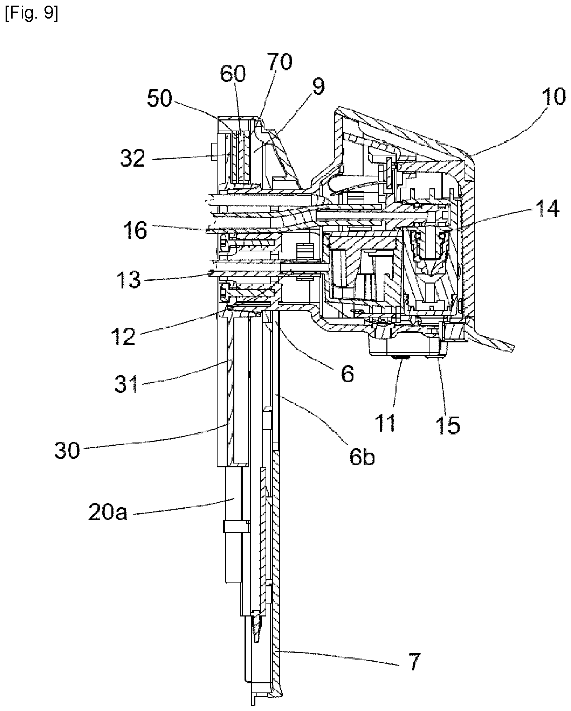

La tête de distribution 10 comporte une buse 11 de distribution de café (Fig.4 et 9). La buse 11 de distribution de café fait partie d'un circuit de distribution 12 du café produit dans un dispositif d'infusion (non représentés sur les figures). La machine de préparation de boissons 2 comporte un réservoir 8 (Fig.1) formant une alimentation en eau froide, un distributeur de café en poudre provenant d'un broyeur à café intégré au distributeur et le dispositif d'infusion alimenté en eau chaude par une chaudière (non représentés sur les figures). Le circuit de distribution 12 du café comporte une conduite 13 souple pour permettre la mobilité de la tête de distribution 10.

La tête de distribution 10 comporte un système de moussage de lait 14 et une buse 15 de distribution d'eau chaude ou de lait chaud moussé café (Fig.4 et 9). La tête de distribution 10 comporte un orifice 5 destiné à être raccordé à un pot contenant du lait par un tuyau souple (non représentés sur les figures). La chaudière permet de produire de l'eau chaude pour alimenter le système de moussage 14 en eau chaude et/ou vapeur qui circule dans une conduite 16 souple pour permettre la mobilité de la tête de distribution 10.

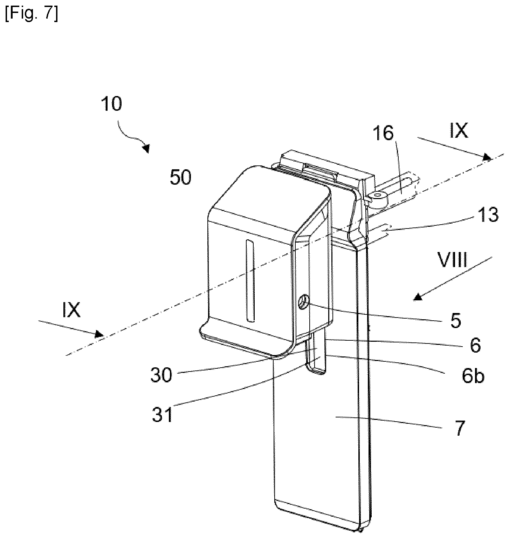

La tête de distribution 10 est montée coulissante verticalement le long de la face avant 7 qui comporte une ouverture 6 s'étendant verticalement et à travers laquelle s'étendent les conduites 13, 16 souples. La tête de distribution 10 est mobile entre une position haute d'attente (Fig.7) et une position basse (Fig.2) de travail dans laquelle la buse 11 de distribution de café est agencée à proximité d'une ouverture supérieure d'un récipient de petite taille. La tête de distribution 10 peut prendre une position intermédiaire adaptée à la taille du récipient.

La machine de préparation de boissons 2 comporte un organe de recouvrement 30 de l'ouverture 6, agencé à l'intérieur du bâti 2 et relié à la tête de distribution 10. L'organe de recouvrement 30 comporte un panneau 31 solidaire de la tête de distribution 10 et des première, deuxième et troisième plaques 50, 60, 70 mobiles verticalement par rapport au bâti 3 et par rapport au panneau 31. Les première, deuxième et troisième plaques 50, 60, 70 sont agencées au-dessus du panneau 31 dans une position déployée pour recouvrir une portion supérieure 6a de l'ouverture 6 lorsque la tête de distribution 10 est en position basse (Fig.2 et 4). Le panneau 31 est destiné à recouvrir une portion inférieure 6b de l'ouverture 6 lorsque la tête de distribution 10 est en position haute (Fig.7 et 9). La tête de distribution 10 participe également au masquage de l'ouverture 6.

Les première, deuxième et troisième plaques 50, 60, 70 et le panneau 31 sont mobiles lors du déplacement de la tête de distribution 10 de la position basse à la position haute entre la position déployée et une position de rangement dans laquelle les première, deuxième et troisième plaques 50, 60, 70 et une partie d'extrémité 32 du panneau 31 sont agencées de manière superposée au-dessus de l'ouverture 6, à l'intérieur d'un logement 9 (Fig.9) agencé derrière la face avant 7 du bâti 3.

Les première, deuxième et troisième plaques 50, 60, 70 et le panneau 31 peuvent prendre des première, deuxième et troisième positions intermédiaires rabattues dans lesquelles les première, deuxième et troisième plaques 50, 60, 70 et la partie d'extrémité 32 du panneau 31 sont superposées successivement (non représentées sur les figures).

Dans la première position intermédiaire rabattue, les première, deuxième et troisième plaques 50, 60, 70 et la partie d'extrémité 32 du panneau 31 sont superposées et la première plaque 50 participe au recouvrement de l'ouverture 6. Dans la deuxième position intermédiaire rabattue, les deuxième et troisième plaques 60, 70 et la partie d'extrémité 32 du panneau 31 sont superposées et les première et deuxième plaques 50, 60 participent au recouvrement de l'ouverture 6. Dans la troisième position intermédiaire rabattue, la troisième plaque 70 et la partie d'extrémité 32 du panneau 31 sont superposées et les première, deuxième et troisième plaques 50, 60, 70 participent au recouvrement de l'ouverture 6. Les première, deuxième et troisième plaques 50, 60, 70 et la partie d'extrémité 32 du panneau 31 coulissent verticalement les unes par rapport aux autres pour former des volets gigognes.

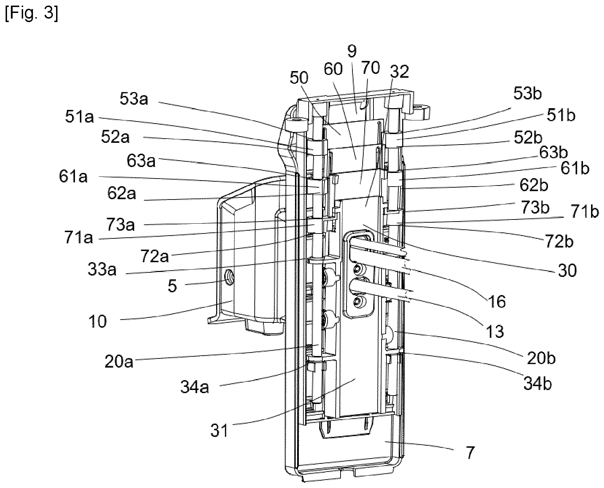

Tel que visible à la figure 3, la face avant 7 du bâti 3 comporte deux tiges de guidages 20a, 20b agencées verticalement de part et d'autre de l'ouverture 6. La tête de distribution 10 munie du panneau 31 et les première, deuxième et troisième plaques 50, 60, 70 sont mobiles verticalement sur les deux tiges de guidage 20a, 20b. Le panneau 31 comporte deux paliers supérieurs 33a, 33b et deux paliers inférieurs 34a, 34b de guidage qui coopèrent respectivement avec les deux tiges de guidage 20a, 20b. Les première, deuxième et troisième plaques 50, 60, 70 comportent respectivement deux douilles de guidage 51a, 51b, 61a, 61b, 71a, 71b qui coopèrent respectivement avec les deux tiges de guidages 20a, 20b. Chaque douille de guidage 51a, 51b, 61a, 61b, 71a, 71b comporte une face inférieure 52a, 52b, 62a, 62b, 72a, 72b et une face supérieure 53a, 53b, 63a, 63b, 73a, 73b.

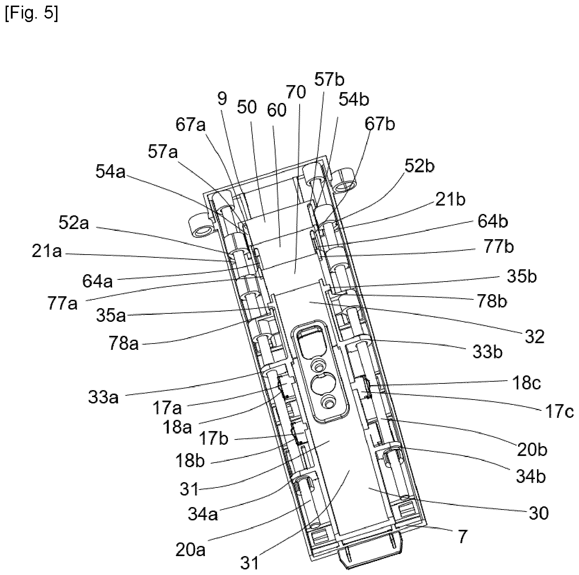

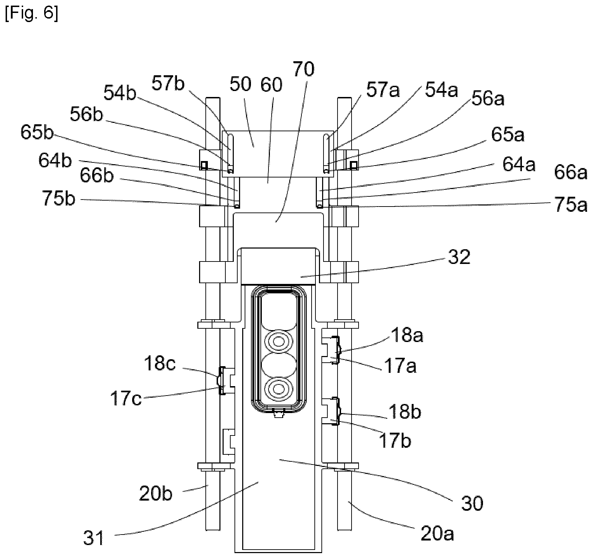

La tête de distribution 10 est réglable en hauteur et comporte un dispositif de maintien configuré pour maintenir en position la tête de distribution 10 entre la position haute et la position basse. Le dispositif de maintien comporte des aimants 17a, 17b, 17c (Fig.5 et 6) qui coopèrent magnétiquement avec les tiges de guidage 20a, 20b qui sont métalliques, et des éléments de frottement et d'usure 18a, 18b, 18c venant au contact des tiges de guidage 20a, 20b métallique sous l'action des aimants 17a, 17b, 17c, les éléments de frottement et d'usure 18a, 18b, 18c étant configurés pour maintenir une distance non nulle, sensiblement constante, entre les aimants 17a, 17b, 17c et les tiges de guidage 20a, 20b métalliques respectives.

Les première, deuxième et troisième plaques 50, 60, 70 sont ramenées vers le bas par gravité lorsque la tête de distribution 10 passe de la position haute à la position basse. Conformément à la figure 5, la face avant 7 du bâti 3 comporte deux butées d'arrêt 21a, 21b de la première plaque 50 dans son déplacement vers le bas, en position déployée au-dessus du panneau 31. Les deux butées d'arrêt 21a, 21b coopèrent avec les deux faces inférieures 52a, 52b des deux douilles de guidage 51a, 51b de la première plaque 50. La première plaque 50 comporte deux ouvertures oblongues 54a, 54b latérales (Fig.5 et 6), agencées verticalement et la deuxième plaque 60 comporte deux pions 65a, 65b qui coulissent dans les deux ouvertures oblongues 54a, 54b. Les deux ouvertures oblongues 54a, 54b comportent deux extrémités inférieures 56a, 56b qui font office de butées d'arrêt pour les pions 65a, 65b lorsque la deuxième plaque 60 est en position déployée au-dessus du panneau 31. La deuxième plaque 60 comporte deux ouvertures oblongues 64a, 64b agencées verticalement, parallèlement aux deux ouvertures oblongues 54a, 54b, et la troisième plaque 70 comporte deux pions 75a, 75b qui coulissent dans les deux ouvertures oblongues 64a, 64b. Les deux ouvertures oblongues 64a, 64b comportent deux extrémités inférieures 66a, 66b qui font office de butées d'arrêt pour les pions 75a, 75b lorsque la troisième plaque 70 est en position déployée au-dessus du panneau 31. Ainsi, en position déployée, sous l'effet de la gravité, la troisième plaque 70 est suspendue à la deuxième plaque 60 qui est elle-même suspendue à la première plaque 50. En cas de frottements empêchant le retour en position déployée sous l'effet de la gravité des première et deuxième plaques, les deux pions 75a, 75b de la troisième plaque 70 prennent appui sur deux extrémités inférieures 66a, 66b pour ramener la deuxième plaque 60 en position déployée. De la même manière, les deux pions 65a, 65b de la deuxième plaque 60 prennent appui sur deux extrémités inférieures 56a, 56b pour ramener la première plaque 50 en position déployée.

La troisième plaque 70 comporte deux butées supérieures 77a, 77b et deux butées inférieures 78a, 78b disposées latéralement, à proximité des tiges de guidages 20a, 20b. La partie d'extrémité 32 comporte deux pattes latérales 35a, 35b qui coulissent entre les deux butées supérieures 77a, 77b et les deux butées inférieures 78a, 78b. Les deux pattes latérales 35a, 35b agissent sur les butées inférieures 78a, 78b en cas de coincement des première, deuxième ou troisième plaques 50, 60, 70 dans leur mouvement respectif vers le bas.

Les deux ouvertures oblongues 64a, 64b de la deuxième plaque 60 comportent deux extrémités supérieures 67a, 67b qui ferment un élément d'appui pour les deux pions 75a, 75b agencés sur la troisième plaque 70. Les deux ouvertures oblongues 54a, 54b de la première plaque 50 comportent deux extrémités supérieures 57a, 57b qui forment un élément d'appui pour les deux pions 65a, 65b agencés sur la deuxième plaque 60.

En fonctionnement, lorsque l'utilisateur déplace la tête de distribution 10 vers le haut de la position basse vers la position haute, la partie d'extrémité 32 du panneau 31 passe de la position déployée à la troisième position intermédiaire rabattue. Les deux pattes latérales 35a, 35b viennent en appui sur les deux butées supérieures 77a, 77b pour déplacer la troisième plaque 70 dans la deuxième position intermédiaire rabattue. Dans ce déplacement les deux pions 75a, 75b de la troisième plaque 70 coulissent dans les ouvertures oblongues 64a, 64b de la deuxième plaque 60 jusqu'à ce que les deux pions 75a, 75b viennent en appui sur les deux extrémités supérieures 67a, 67b. La deuxième plaque 60 est ensuite entrainée dans la première position intermédiaire rabattue. Dans ce déplacement les deux pions 65a, 65b de la deuxième plaque coulissent dans les ouvertures oblongues 54a, 54b de la première plaque 50 jusqu'à ce que les deux pions 65a, 65b viennent en appui sur les deux extrémités supérieures 57a, 57b. La première plaque 50 est ensuite entrainée dans la position de rangement dans le logement 9, derrière la face avant 7 (Fig.7 à 9).

Bien entendu, l'invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention.

Dans une variante de réalisation, chaque palier supérieur 33a, 33b de guidage du panneau 31 comporte une face supérieure qui forme un élément d'entrainement qui agit successivement sur les douilles de guidage 51a, 51b, 61a, 61b, 71a, 71b des première, deuxième et troisième plaques lorsque la tête de distribution 10 passe de la position basse à la position haute.

## Revendications

1. Machine de préparation de boissons (2) comportant un bâti (3) et une tête de distribution (10) disposée devant le bâti (3) et qui comprend au moins une conduite (13, 16) de distribution de boissons se terminant par une buse (11, 15) de distribution de boissons, ladite tête de distribution (10) étant mobile entre une position haute d'attente et une position basse de travail dans laquelle la buse (11, 15) de distribution de boissons est agencée à proximité d'une ouverture supérieure d'un récipient, ledit bâti (3) comportant une ouverture (6) s'étendant verticalement, à travers laquelle s'étend l'au moins une conduite (13, 16) de distribution de boissons, ladite machine de préparation de boissons (2) comportant un organe de recouvrement (30) de ladite ouverture (6), agencé à l'intérieur du bâti (3) et relié à la tête de distribution (10), **caractérisée en ce que** l'organe de recouvrement (30) comporte un panneau (31) solidaire de la tête de distribution (10) et au moins une première plaque (50) mobile verticalement par rapport au bâti (3) et par rapport au panneau (31), ladite au moins première plaque (50) et le panneau (31) étant mobiles lors du déplacement de la tête de distribution (10) entre
- une position de rangement dans laquelle l'au moins une première plaque (50) et une partie d'extrémité (32) du panneau (31) sont agencées de manière superposée au-delà de l'ouverture (6), à l'intérieur du bâti (3),
- une position intermédiaire rabattue dans laquelle l'au moins une première plaque (50) et la partie d'extrémité (32) sont superposées et l'au moins une première plaque (50) participe au recouvrement de l'ouverture (6)
- et une position déployée dans laquelle l'au moins une première plaque (50) s'étend au-delà du panneau (31) pour participer au recouvrement de l'ouverture (6).

2. Machine de préparation de boissons (2) selon la revendication 1, **caractérisée en ce que** l'organe de recouvrement (30) comporte un élément d'entrainement (65a, 65b, 67a, 67b, 75a, 75b, 77a, 77b, 35a, 35b) qui coopère avec un élément d'appui (57a, 57b) de l'au moins une première plaque (50) pour déplacer l'au moins une première plaque (50) vers le haut.

3. Machine de préparation de boissons (2) selon la revendication 2, **caractérisée en ce que** le panneau (31) comporte deux pattes latérales (35a, 35b) qui forment l'élément d'entrainement de l'au moins une première plaque (50).

4. Machine de préparation de boissons (2) selon l'une quelconque des revendications précédentes, **caractérisée en ce que** l'au moins une première plaque (50) est ramenée vers le bas par gravité.

5. Machine de préparation de boissons (2) selon la revendication 4, **caractérisée en ce que** le bâti (3) comporte une butée d'arrêt (21a, 21b) de l'au moins une première plaque (50) dans son déplacement vers le bas, l'au moins une première plaque (50) comportant une face inférieure (52a, 52b) destinée à coopérer avec la butée d'arrêt (21a, 21b).

6. Machine de préparation de boissons (2) selon l'une quelconque des revendications précédentes, **caractérisée en ce que** le bâti (3) comporte deux tiges de guidages (20a, 20b) agencées verticalement de part et d'autre de l'ouverture (6), la tête de distribution (10) munie du panneau (31) et l'au moins une première plaque (50) étant mobiles verticalement sur les deux tiges de guidage (20a, 20b).

7. Machine de préparation de boissons (2) selon la revendication 6, **caractérisée en ce que** l'au moins une première plaque (50) comporte deux douilles de guidage (51a, 51b) qui coopèrent respectivement avec les deux tiges de guidages (20a, 20b) et **en ce que** chaque douille de guidage (51a, 51b) comporte une face inférieure (52a, 52b) qui forme une face d'appui de l'au moins une première plaque (50), la face inférieure (52a, 52b) coopérant avec une butée d'arrêt (21a, 21b) agencée sur le bâti (3).

8. Machine de préparation de boissons (2) selon l'une quelconque des revendications précédentes, **caractérisée en ce que** l'au moins une première plaque (50) est destinée à masquer l'ouverture (6) lorsque la tête de distribution (10) est dans sa position basse, l'au moins une première plaque (50) s'étendant au-dessus du panneau (31) dans la position déployée.

9. Machine de préparation de boissons (2) selon l'une quelconque des revendications précédentes, **caractérisée en ce que** l'organe de recouvrement (30) comporte au moins des première et deuxième plaques (50, 60) mobiles verticalement l'une par rapport à l'autre, par rapport au bâti (3) et par rapport au panneau (31), lesdites au moins première et deuxième plaques (50, 60) et le panneau (31) étant mobiles lors du déplacement de la tête de distribution (10) entre
- une position de rangement dans laquelle les au moins première et deuxième plaques (50, 60) et la partie d'extrémité (32) du panneau (31) sont agencées de manière superposée au-delà de l'ouverture (6), à l'intérieur du bâti (3),
- une première position intermédiaire rabattue dans laquelle les au moins première et deuxième plaques (50, 60) et la partie d'extrémité (32) du panneau (31) sont superposées et l'au moins une première plaque (50) participe au recouvrement de l'ouverture (6),
- une deuxième position intermédiaire rabattue dans laquelle l'au moins une deuxième plaque (60) et la partie d'extrémité (32) du panneau sont superposées et les aux moins première et deuxième plaques (50, 60) participent au recouvrement de l'ouverture (6),
- et une position déployée dans laquelle les aux moins première et deuxième plaques (50, 60) s'étendent au-delà du panneau (31) pour participer au recouvrement de l'ouverture (6).

10. Machine de préparation de boissons (2) selon l'une quelconque des revendications précédentes, **caractérisée en ce que** l'organe de recouvrement (30) comporte au moins des première, deuxième et troisième plaques (50, 60, 70) mobiles verticalement chacune par rapport aux autres, par rapport au bâti (3) et par rapport au panneau (31), lesdites au moins première, deuxième et troisième plaques (50, 60, 70) et le panneau (31) étant mobiles lors du déplacement de la tête de distribution (10) entre
- une position de rangement dans laquelle les au moins première, deuxième et troisième plaques (50, 60, 70) et la partie d'extrémité (32) du panneau (30) sont agencées de manière superposée au-delà de l'ouverture (6), à l'intérieur du bâti (3),
- une première position intermédiaire rabattue dans laquelle les au moins première, deuxième et troisième plaques (50, 60,70) et la partie d'extrémité (32) du panneau (31) sont superposées et l'au moins une première plaque (50) participe au recouvrement de l'ouverture (6),
- une deuxième position intermédiaire rabattue dans laquelle les aux moins deuxième et troisième plaques (60, 70) et une partie d'extrémité (32) du panneau (31) sont superposées et les aux moins première et deuxième plaques (50, 60) participent au recouvrement de l'ouverture (6),
- une troisième position intermédiaire rabattue dans laquelle l'au moins troisième plaque (70) et la partie d'extrémité (32) du panneau (31) sont superposées et les aux moins première, deuxième et troisième plaques (50, 60, 70) participent au recouvrement de l'ouverture (6)
- et une position déployée dans laquelle les aux moins première, deuxième et troisième plaques (50, 60, 70) s'étendent au-delà du panneau (31) pour participer au recouvrement de l'ouverture (6).

11. Machine de préparation de boissons (2) selon l'une quelconque des revendications précédentes, **caractérisée en ce qu'**elle est une machine à café automatique.

## Patentansprüche

1. Getränkezubereitungsmaschine (2), die ein Gehäuse (3) und einen Ausgabekopf (10) beinhaltet, der vor dem Gehäuse (3) angeordnet ist, und der mindestens eine Ausgabeleitung (13, 16) für Getränke umfasst, die durch eine Getränkeabgabedüse (11, 15) abschließt, wobei der Abgabekopf (10) zwischen einer oberen Warteposition und einer unteren Arbeitsposition, in der die Getränkeabgabedüse (11, 15) in der Nähe einer oberen Öffnung eines Behälters angeordnet ist, wobei das Gehäuse (3) eine Öffnung (6) beinhaltet, die sich vertikal erstreckt, durch welche sich die mindestens eine Getränkeabgabeleitung (13, 16) erstreckt, wobei die Getränkezubereitungsmaschine (2) ein Abdeckorgan (30) für die Öffnung (6) beinhaltet, das im Inneren des Gehäuses (3) angeordnet ist, und an den Abgabekopf (10) angeschlossen ist, **dadurch gekennzeichnet, dass** das Abdeckorgan (30) eine Blende (31) beinhaltet, die fest mit dem Abgabekopf (10) verbunden ist, und mindestens eine in Bezug auf das Gehäuse (3) und in Bezug auf die Blende (31) bewegliche erste vertikal bewegliche Platte (50), wobei die mindestens erste Platte (50) und die Blende (31) beim Verschieben des Abgabekopfes (10) beweglich sind zwischen
- einer Ablageposition, in der die mindestens eine erste Platte (50) und ein Endteil (32) der Blende (31) über die Öffnung (6) hinweg überlagert, im Inneren des Gehäuses (3) angeordnet sind,
- einer umgeklappten Zwischenposition, in der die mindestens eine Platte (50) und das Endteil (32) überlagert sind und sich die mindestens eine erste Platte (50) an der Abdeckung der Öffnung (6) beteiligt
- und einer ausgebreiteten Position, in der sich die mindestens eine erste Platte (50) über die Blende (31) hinweg erstreckt, um sich an der Abdeckung der Öffnung (6) zu beteiligen.

2. Getränkezubereitungsmaschine (2) nach Anspruch 1, **dadurch gekennzeichnet, dass** das Abdeckorgan (30) ein Antriebselement (65a, 65b, 67a, 67b, 75a, 75b, 77a, 77b, 35a, 35b) beinhaltet, das mit einem Anlegeelement (57a, 57b) der mindestens einen ersten Platte (50) zusammenwirkt, um die mindestens eine erste Platte (50) nach oben zu verschieben.

3. Getränkezubereitungsmaschine (2) nach Anspruch 2, **dadurch gekennzeichnet, dass** die Blende (31) zwei Seitenlaschen (35a, 35b) beinhaltet, die das Antriebselement der mindestens einen ersten Platte (50) bilden.

4. Getränkezubereitungsmaschine (2) nach einem der vorstehenden Ansprüche, **dadurch gekennzeichnet, dass** die mindestens eine erste Platte (50) durch Schwerkraft nach unten zurückgebracht wird.

5. Getränkezubereitungsmaschine (2) nach Anspruch 4, **dadurch gekennzeichnet, dass** das Gehäuse (3) einen Endanschlag (21a, 21b) für die mindestens eine erste Platte (50) bei ihrer Verschiebung nach unten beinhaltet, wobei die mindestens eine erste Platte (50) eine Unterseite (52a, 52b) beinhaltet, die dazu bestimmt ist, mit dem Endanschlag (21a, 21 b) zusammenzuwirken.

6. Getränkezubereitungsmaschine (2) nach einem der vorstehenden Ansprüche, **dadurch gekennzeichnet, dass** das Gehäuse (3) zwei Führungsstifte (20a, 20b) beinhaltet, die vertikal beiderseits der Öffnung (6) angeordnet sind, wobei der mit der Blende (31) versehene Abgabekopf (10) und die mindestens eine erste Platte (50) auf den beiden Führungsstiften (20a, 20b) vertikal beweglich ist.

7. Getränkezubereitungsmaschine (2) nach Anspruch 6, **dadurch gekennzeichnet, dass** die mindestens eine erste Platte (50) zwei Führungshülsen (51a, 51b) beinhaltet, die jeweils mit den beiden Führungsstiften (20a, 20b) zusammenwirken, und dadurch, dass jede Führungshülse (51a, 51b) eine Unterseite (52a, 52b) beinhaltet, die eine Anlegeseite der mindestens einen ersten Platte (50) bildet, wobei die Unterseite (52a, 52b) mit einem Endanschlag (21a, 21b), der an dem Gehäuse (3) angeordnet ist, zusammenwirkt.

8. Getränkezubereitungsmaschine (2) nach einem der vorstehenden Ansprüche, **dadurch gekennzeichnet, dass** die mindestens eine erste Platte (50) dazu bestimmt ist, um die Öffnung (6) zu verbergen, wenn der Abgabekopf (10) in seiner unteren Position ist, wobei sich die mindestens eine erste Platte (50) oberhalb der Blende (31) in der ausgebreiteten Position erstreckt.

9. Getränkezubereitungsmaschine (2) nach einem der vorstehenden Ansprüche, **dadurch gekennzeichnet, dass** das Abdeckorgan (30) mindestens erste und zweite vertikal zueinander bewegliche Platten (50, 60) in Bezug auf das Gehäuse (3) und in Bezug auf die Blende (31) beinhaltet, wobei die mindestens erste und zweite Platte (50, 60) und die Blende (31) bei der Verschiebung des Abgabekopfes (10) beweglich sind zwischen
- einer Ablageposition, in der die mindestens erste und zweite Platte (50, 60) und das Endteil (32) der Blende (31) über die Öffnung (6) hinweg überlagert, im Inneren des Gehäuses (3) angeordnet sind,
- einer ersten umgeklappten Zwischenposition, in der die mindestens erste und zweite Platte (50, 60) und das Endteil (32) der Blende (31) überlagert sind und sich die mindestens eine erste Platte (50) an der Abdeckung der Öffnung (6) beteiligt,
- einer zweiten umgeklappten Zwischenposition, in der die mindestens eine zweite Platte (60) und das Endteil (32) der Blende überlagert sind und sich die mindestens erste und zweite Platte (50, 60) an der Abdeckung der Öffnung (6) beteiligen,
- und einer ausgebreiteten Position, in der sich die mindestens erste und zweite Platte (50, 60) über die Blende (31) hinweg erstrecken, um sich an der Abdeckung der Öffnung (6) zu beteiligen.

10. Getränkezubereitungsmaschine (2) nach einem der vorstehenden Ansprüche, **dadurch gekennzeichnet, dass** das Abdeckorgan (30) mindestens erste, zweite und dritte jeweils in Bezug auf das Gehäuse (3) und in Bezug auf die Blende (31) zueinander vertikal bewegliche Platten (50, 60, 70) beinhaltet, wobei die mindestens erste, zweite und dritte Platte (50, 60, 70) und die Blende (31) beim Verschieben des Abgabekopfes (10) beweglich sind zwischen
- einer Ablageposition, in der die mindestens erste, zweite und dritte Platte (50, 60, 70) und das Endteil (32) der Blende (30) über die Öffnung (6) hinweg überlagert
im Inneren des Gehäuses (3) angeordnet sind,
- einer ersten umgeklappten Zwischenposition, in der die mindestens erste, zweite und dritte Platte (50, 60, 70) und das Endteil (32) der Blende (31) überlagert sind und sich die mindestens eine erste Platte (50) an der Abdeckung der Öffnung (6) beteiligt,
- einer zweiten umgeklappten Zwischenposition, in der die mindestens zweite und dritte Platte (60, 70) und das Endteil (32) der Blende (31) überlagert sind und sich die mindestens erste und zweite Platte (50, 60) an der Abdeckung der Öffnung (6) beteiligen,
- einer dritten umgeklappten Zwischenposition, in der die mindestens dritte Platte (70) und das Endteil (32) der Blende (31) überlagert sind und sich die mindestens erste, zweite und dritte Platte (50, 60, 70) an der Abdeckung der Öffnung (6) beteiligen
- und einer ausgebreiteten Position, in der sich die mindestens erste, zweite und dritte Platte (50, 60, 70) über die Blende (31) hinweg erstrecken, um sich an der Abdeckung der Öffnung (6) zu beteiligen.

11. Getränkezubereitungsmaschine (2) nach einem der vorstehenden Ansprüche, **dadurch gekennzeichnet, dass** sie eine automatische Kaffeemaschine ist.

## Claims

1. Beverage preparation machine (2) comprising a frame (3) and a dispensing head (10) placed in front of the frame (3) and which comprises at least one beverage dispensing conduit (13, 16) ending with a beverage dispensing nozzle (11, 15), said dispensing head (10) being mobile between a high waiting position and a low working position in which the beverage dispensing nozzle (11, 15) is arranged in the vicinity of an upper opening of a recipient, said frame (3) comprising an opening (6) extending vertically, through which extends the at least one beverage dispensing conduit (13, 16), said beverage preparation machine (2) comprising a member for covering (30) said opening (6), arranged inside the frame (3) and connected to the dispensing head (10), **characterised in that** the covering member (30) comprises a panel (31) integral with the dispensing head (10) and at least one first plate (50) mobile vertically with respect to the frame (3) and with respect to the panel (31), said at least first plate (50) and the panel (31) being mobile during the displacement of the dispensing head (10) between
- a storage position in which the at least one first plate (50) and an end portion (32) of the panel (31) are arranged in a superimposed manner beyond the opening (6), inside the frame (3),
- a folded intermediate position in which the at least one first plate (50) and the end portion (32) are superimposed and the at least one first plate (50) participates in the covering of the opening (6)
- and a deployed position in which the at least one first plate (50) extends beyond the panel (31) to participate in the covering of the opening (6).

2. Beverage preparation machine (2) according to claim 1, **characterised in that** the covering member (30) comprises a driving element (65a, 65b, 67a, 67b, 75a, 75b, 77a, 77b, 35a, 35b) that cooperates with a support element (57a, 57b) of the at least one first plate (50) to displace the at least one first plate (50) upwards.

3. Beverage preparation machine (2) according to claim 2, **characterised in that** the panel (31) comprises two side tabs (35a, 35b) that form the driving element of the at least one first plate (50).

4. Beverage preparation machine (2) according to any of the preceding claims, **characterised in that** the at least one first plate (50) is brought downwards via gravity.

5. Beverage preparation machine (2) according to claim 4, **characterised in that** the frame (3) comprises an end stop (21a, 21b) of the at least one first plate (50) in its displacement downwards, the at least one first plate (50) comprising a lower face (52a, 52b) intended to cooperate with the end stop (21a, 21 b).

6. Beverage preparation machine (2) according to any of the preceding claims, **characterised in that** the frame (3) comprises two guide rods (20a, 20b) arranged vertically on either side of the opening (6), the dispensing head (10) provided with a panel (31) and the at least one first plate (50) being mobile vertically on the two guide rods (20a, 20b).

7. Beverage preparation machine (2) according to claim 6, **characterised in that** the at least one first plate (50) comprises two guide bushings (51a, 51b) that respectively cooperate with the two guide rods (20a, 20b) and **in that** each guide bushing (51a, 51b) comprises a lower face (52a, 52b) which forms a support face of the at least one first plate (50), with the lower face (52a, 52b) cooperating with an end stop (21a, 21b) arranged on the frame (3).

8. Beverage preparation machine (2) according to any of the preceding claims, **characterised in that** the at least one first plate (50) is intended to mask the opening (6) when the dispensing head (10) is in its low position, the at least one first plate (50) extending above the panel (31) in the deployed position.

9. Beverage preparation machine (2) according to any of the preceding claims, **characterised in that** the covering member (30) comprises at least first and second plates (50, 60) mobile vertically with respect to one another, with respect to the frame (3) and with respect to the panel (31), said at least first and second plates (50, 60) and the panel (31) being mobile during the displacement of the dispensing head (10) between
- a storage position in which the at least first and second plates (50, 60) and the end portion (32) of the panel (31) are arranged in a superimposed manner beyond the opening (6), inside the frame (3),
- a first folded intermediate position in which the at least first and second plates (50, 60) and the end portion (32) of the panel (31) are superimposed and the at least one first plate (50) participates in the covering of the opening (6),
- a second folded intermediate position in which the at least one second plate (60) and the end portion (32) of the panel are superimposed and the at least first and second plates (50, 60) participate in the covering of the opening (6),
- and a deployed position in which the at least first and second plates (50, 60) extend beyond the panel (31) to participate in the covering of the opening (6).

10. Beverage preparation machine (2) according to any of the preceding claims, **characterised in that** the covering member (30) comprises at least first, second and third plates (50, 60, 70) vertically mobile each one with respect to the others, with respect to the frame (3) and with respect to the panel (31), said at least first, second and third plates (50, 60, 70) and the panel (31) being mobile during the displacement of the dispensing head (10) between
- a storage position in which the at least first, second and third plates (50, 60, 70) and the end portion (32) of the panel (30) are arranged in a superimposed manner beyond the opening (6), inside the frame (3),
- a first folded intermediate position in which the at least first, second and third plates (50, 60,70) and the end portion (32) of the panel (31) are superimposed and the at least one first plate (50) participates in the covering of the opening (6),
- a second folded intermediate position in which the at least second and third plates (60, 70) and an end portion (32) of the panel (31) are superimposed and the at least first and second plates (50, 60) participate in the covering of the opening (6),
- a third folded intermediate position in which the at least third plate (70) and the end portion (32) of the panel (31) are superimposed and the at least first, second and third plates (50, 60, 70) participate in the covering of the opening (6)
- and a deployed position in which the at least first, second and third plates (50, 60, 70) extend beyond the panel (31) to participate in the covering of the opening (6).

11. Beverage preparation machine (2) according to any of the preceding claims, **characterised in that** it is an automatic coffee machine.
